# EUROPÄISCHE PATENTSCHRIFT

(11) **EP 1 132 165 B1**
(45) Veröffentlichungstag und Bekanntmachung des Hinweises auf die Patenterteilung: **13.04.2005**
(21) Anmeldenummer: 00125735.1
(22) Anmeldetag: 24.11.2000
(51) Int. Cl.: B23G 1/46

(54) **Gewindeschneidapparat mit abgedichtetem Spannkopf**
Thread cutting apparatus mit sealed clamping head
Appareil de filetage avec tête de serrage étange

(30) Priorität: 05.01.2000 DE 10000175
(43) Veröffentlichungstag der Anmeldung: 12.09.2001
(73) Patentinhaber: EMUGE-Werk Richard Glimpel GmbH & Co.KG Fabrik für Präzisionswerkzeuge, 91207 Lauf (DE)
(72) Erfinder: Watzke, Rüdiger, 91233 Neunkirchen a.S. (DE)
(74) Vertreter: Blaumeier, Jörg

(56) Entgegenhaltungen:
- DE-A- 1 902 279
- DE-A- 2 364 612
- FR-A- 1 342 366
- US-A- 3 037 393

## Beschreibung

Die Erfindung bezieht sich auf einen Gewindeschneidapparat mit einem rotierend und ausziehbar in einem Gehäuse abgedichtet gelagerten Spannkopf, insbesondere für einen Gewindeschneidapparat mit Drehrichtungsumkehr.

Bei derartigen Gewindeschneidapparaten rotiert der Spannkopf im Gehäuse, wobei im Falle von Gewindeschneidapparaten mit Drehrichtungsumkehr die Ausziehbarkeit des Spannkopfs als Auslöser für die Drehrichtungsumkehr ausgenutzt wird. Zur Abdichtung des Spannkopfs wurden bei den bisherigen Apparaten Simmerringe verwendet, die jedoch als Abdichtung für rotierende Teile recht geeignet, für die stattfindende Axialbewegung jedoch nur sehr bedingt einsatzfähig sind.

Der Erfindung liegt daher die Aufgabe zugrunde einen Gewindeschneidapparat der eingangs genannten Art so auszugestalten, dass eine verbesserte Abdichtung des Spannkopfs gegeben ist.

Zur Lösung dieser Aufgabe ist erfindungsgemäß vorgesehen, dass der Spannkopfschaft drehfest aber axial verschiebbar abgedichtet in einer Hülse gelagert ist, die ihrerseits drehbar aber axial unverschiebbar und ebenfalls abgedichtet im Gehäuse gelagert ist.

Diese Aufteilung der Lagerung durch die zwischengeordnete Hülse hat den Vorteil, dass zum einen der Spannkopfschaft über O-Ringe gegen die Hülse abgedichtet sein kann, wobei eine derartige O-Ringabdichtung hervorragend bei Axialbewegungen geeignet ist, während auf der anderen Seite die Hülse über Simmerringe gegen das Gehäuse abgedichtet ist. Durch diese Aufteilung wird also eine Aufteilung der Bewegungen erzielt, das heißt, der Spannkopf bewegt sich nicht in dem umgebenden Teil sowohl rotierend als auch axial verschiebbar, sondern er bewegt sich nur axial verschiebbar gegenüber der Hülse und die Hülse bewegt sich nur rotierend drehbar gegenüber dem umgebenden Gehäuse. Dies lässt den Einsatz der bereits angesprochenen Spezialdichtungen für Axialbewegungen oder rotierende Bewegungen zu.

In Ausgestaltung der Erfindung kann dabei vorgesehen sein, dass der Spannkopfschaft und die Hülse durch in einander zugewandte Längsnuten eingreifende Kugeln drehfest und axial verschiebbar miteinander verkuppelt sind, während auf der anderen Seite die Hülse über Kugellager drehbar aber axial unverschiebbar im Gehäuse gelagert sein kann.

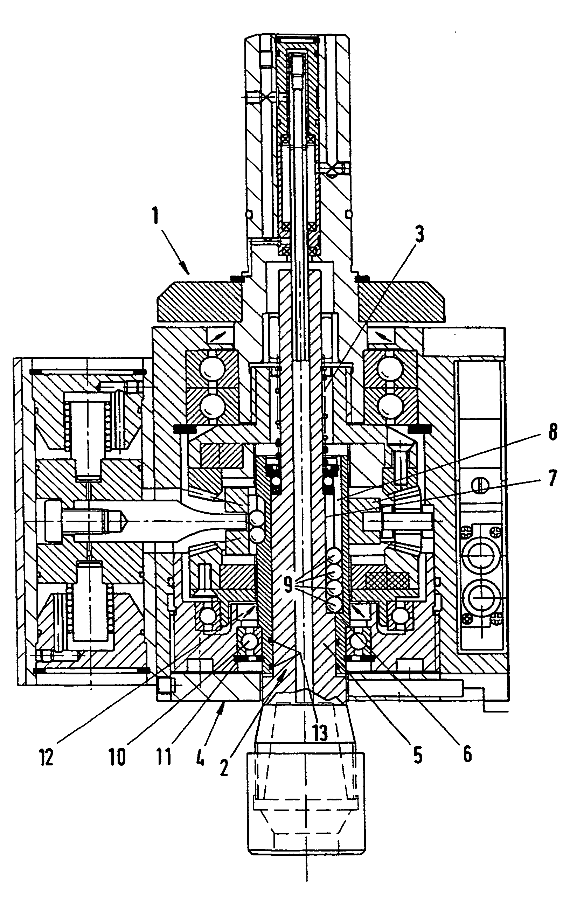

Weitere Vorteile, Merkmale und Einzelheiten der Erfindung ergeben sich aus der nachfolgenden Beschreibung eines Ausführungsbeispiels sowie anhand der Zeichnung. Diese zeigt dabei einen Schnitt durch einen Gewindeschneidapparat mit Drehrichtungsumkehr und ein Planetengetriebe mit einer durch ein externes Antriebsglied betätigbaren Umschalteinrichtung, wobei die sich auf diese Umschalteinrichtung und das Planetengetriebe beziehenden Bauteile im vorliegenden Fall nicht näher beschrieben werden sollen, da sie nicht Gegenstand des vorliegenden Patentbegehrens sind.

Der gezeigte Gewindeschneidapparat 1 umfasst einen Spannkopf 2 der sowohl rotierend als auch axial gegen die Wirkung einer Feder 3 ausziehbar im Gehäuse 4 gelagert ist.

Erfindungsgemäß ist dabei die Lagerung so ausgebildet, dass der Schaft 5 des Spannkopfs 2 drehfest aber axial verschiebbar mit einer Hülse 6 verbunden ist. Zu diesem Zweck weist der Schaft 5 eine Nut 7 und die Hülse 6 eine dieser Nut 7 zugekehrte Nut 8 auf, in die Kugeln 9 eingreifen. Diese bilden eine Drehmitnahmekupplung, die jedoch eine axiale Verschiebung infolge der langgestreckten Nuten 7 und 8 zulässt.

Die Hülse 6 wiederum ist im Gehäuse mit Hilfe des Kugellagers 10 und des Sprengrings 11 axial unverschiebbar aber drehbar gegenüber dem Gehäuse gelagert. Dies ermöglicht den vorteilhaften Einsatz von Simmerringen 12 zur Abdichtung der Hülse 6 gegenüber dem Gehäuse 4, wobei ja Simmerringe zur Abdichtung gegeneinander rotierender Teile besonders geeignet sind. Die Abdichtung des Schafts 5 des Spannkopfs 2 gegenüber der Hülse 6 erfolgt mit Hilfe von O-Ringen 13, die für die Abdichtung axial gegeneinander verschiebbarer Teile, wie es der Spannkopfschaft 5 und die Hülse 6 darstellen, besonders günstig sind.

## Patentansprüche

1. Gewindeschneidapparat (1) mit einem rotierend und ausziehbaren in einem Gehäuse abgedichtet gelagerten Spannkopf (2), insbesondere für einen Gewindeschneidapparat mit Drehrichtungsumkehr, **dadurch gekennzeichnet, dass** der Spannkopfschaft (5) drehfest aber axial verschiebbar abgedichtet in einer Hülse (6) gelagert ist, die ihrerseits drehbar aber axial unverschiebbar abgedichtet im Gehäuse (4) gelagert ist.

2. Spannkopf nach Anspruch 1, **dadurch gekennzeichnet, dass** der Spannkopfschaft (5) über O-Ringe (13) gegen die Hülse (6) abgedichtet ist.

3. Spannkopf nach Anspruch 1 oder 2, **dadurch gekennzeichnet, dass** die Hülse (6) über Simmerringe (12) gegen das Gehäuse (4) abgedichtet ist.

4. Spannkopf nach einem der Ansprüche 1 bis 3, **dadurch gekennzeichnet, dass** der Spannkopfschaft (5) und die Hülse (6) durch in einander zugewandte Längsnuten (7, 8) eingreifende Kugeln (9) drehfest und axial verschiebbar miteinander verbunden sind.

5. Spannkopf nach einem der Ansprüche 1 bis 4, **dadurch gekennzeichnet, dass** die Hülse (6) über Kugellager (10) drehbar aber axial unverschiebbar im Gehäuse (4) gelagert ist.

## Claims

1. Thread-cutting apparatus (1) having a rotary, extensible clamping head (2) mounted in a sealed manner in a housing, in particular for a thread-cutting apparatus with reversible direction of rotation, **characterised in that** the clamping head shank (5) is mounted non-rotatably but axially displaceably in a sealed manner in a sleeve (6), which is in turn mounted rotatably but axially non-displaceably in a sealed manner in the housing (4).

2. Clamping head according to claim 1, **characterised in that** the clamping head shank (5) is sealed with respect to the sleeve (6) via O-rings (13).

3. Clamping head according to claim 1 or 2, **characterised in that** the sleeve (6) is sealed with respect to the housing (4) via shaft seals (12).

4. Clamping head according to one of claims 1 to 3, **characterised in that** the clamping head shank (5) and the sleeve (6) are connected together non-rotatably and axially displaceably by balls (9) engaging in mutually associated longitudinal grooves (7, 8).

5. Clamping head according to one of claims 1 to 4, **characterised in that** the sleeve (6) is mounted rotatably but axially non-displaceably in the housing (4) via ball bearings (10).

## Revendications

1. Appareil à fileter (1 ) comportant une tête de serrage (2) rotative et extractible, montée de manière étanche dans un carter, destinée en particulier à un appareil à fileter avec inversion du sens de rotation, **caractérisé en ce que** la tige (5) de la tête de serrage est montée de manière immobile en rotation, mais axialement mobile, de façon étanche dans une douille (6), qui est elle-même montée rotative, mais axialement immobile, de manière étanche dans le carter (4).

2. Tête de serrage selon la revendication 1, **caractérisée en ce que** la tige (5) de la tête de serrage est rendue étanche par rapport à la douille (6) par des joints toriques (13).

3. Tête de serrage selon la revendication 1 ou 2, **caractérisée en ce que** la douille (6) est rendue étanche par rapport au carter (4) par des bagues à lèvres (12).

4. Tête de serrage selon l'une quelconque des revendications 1 à 3, **caractérisée en ce que** la tige (5) de la tête de serrage et la douille (6) sont assemblées l'une à l'autre de manière immobile en rotation et axialement mobile par l'intermédiaire de billes (9) s'engageant dans des rainures longitudinales (7, 8) face à face.

5. Tête de serrage selon l'une quelconque des revendications 1 à 4, **caractérisée en ce que** la douille (6) est montée dans le carter (4) de manière rotative, mais axialement immobile par l'intermédiaire de roulements à billes (10).
